**Europäisches Patentamt**

**European Patent Office**

**Office européen des brevets**

(19)

(11) **EP 1 302 993 A2**

(12) **EUROPÄISCHE PATENTANMELDUNG**

(43) Veröffentlichungstag:
**16.04.2003 Patentblatt 2003/16**

(51) Int Cl.$^7$: **H01M 2/16**, H01M 10/40

(21) Anmeldenummer: **02021947.3**

(22) Anmeldetag: **28.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **11.10.2001 DE 10150227**

(71) Anmelder: **VARTA Microbattery GmbH**
**30419 Hannover (DE)**

(72) Erfinder:
• **Birke Peter**
**73479 Ellwangen (DE)**

• **Birke Salam Fatima**
**73479 Ellwangen (DE)**
• **Holl Konrad**
**73434 Aalen-Dewangen (DE)**
• **Haug Peter**
**73479 Ellwangen (DE)**
• **Stelzig Heinrich**
**73494 Rosenberg (DE)**
• **Ilic Dejan**
**73479 Ellwangen (DE)**

(74) Vertreter: **Patentanwälte Ruff, Wilhelm, Beier, Dauster & Partner**
**Postfach 10 40 36**
**70035 Stuttgart (DE)**

(54) **Verfahren zur Herstellung eines Elektroden-/Separatorverbundes für galvanische Elemente**

(57) Bei einem beispielhaften Verfahren geht es um die Herstellung eines Elektroden-/Separatorverbunds für galvanische Elemente. Diese enthalten mindestens eine Lithium interkalierende Elektrode, in deren Polymermatrix im Polymer unlösliche elektrochemisch aktive Materialien fein dispergiert sind, und einen Polyolefinseparator. Die Herstellung des Elektroden-/Separatorverbunds erfolgt durch Heißlamination. Dies erfolgt bei Temperaturen, die im Bereich des Schmelz- oder Erweichungspunktes wenigstens eines Teils der Elektrodenoberfläche oder eines Teils der Separatoroberfläche liegt.

Der Separator kann mit einer die Haftung erhöhenden Teilbeschichtung seiner Oberfläche versehen sein und aus einer Sequenz verschiedener Polyolefine bestehen, die unterschiedliche Porositäten besitzen.

**Fig.1**

**Beschreibung**

Gegenstand der Erfindung ist ein Verfahren zur Herstellung eines Elektroden-/Separatorverbunds für galvanische Elemente, die mindestens eine Lithium interkalierende Elektrode enthalten, in deren Polymermatrix im Polymer unlösliche elektrochemisch aktive Materialien fein dispergiert sind. Weiterhin ist Gegenstand der Erfindung ein galvanisches Element mit nach dem Verfahren hergestellten Separator-/Elektrodenverbund.

Zur Herstellung von galvanischen Elementen mit folienförmigen Elektroden, die als aktive Massen Lithium interkalierende Materialien besitzen, sind die verschiedensten Verfahren bekannt:

Dem Dokument EP 954 042 A1 ist ein Lithium-Ionen-Akkumulator zu entnehmen, bei dem die positiven und negativen Folienelektroden mit einem Separator durch eine haftvermittelnde Harzschicht verbunden sind. Die Haftung vermittelnden Schichten können insbesondere einen unerwünschten Isolationseffekt zwischen Elektrode und Separator, nämlich die Hemmung der Elektrolytdiffusion und damit einen erhöhten Innenwiderstand mit sich bringen. Darüber hinaus können durch solche Schichten unerwünschte Stoffe in die Zelle gelangen.

Dem Dokument EP 1 056 142 A1 ist eine Lithium-Ionen-Zelle zu entnehmen, bei der zwischen positiven und negativen Elektrodenfolien ein Gelelektrolyt angeordnet ist. Das Gel besteht insbesondere aus Polyvinylidenfluorid oder Copolymeren von Polyvinylidenfluorid wie beispielsweise Hexafluorpropylen. Die Herstellung solcher Zellen ist aufwendig, da eine Verarbeitung der Elektroden und des Gelelektrolyten im Trokkenraum notwendig ist. Darüber hinaus wird durch solche Elektrolyte oft keine ausreichende Leitfähigkeit erzielt.

Aus dem Dokument DE 19 916 041 A1 ist ein Verfahren bekannt, bei dem auf eine mechanisch stabile Trägerfolie beispielsweise eine Kupferfolie, ein graphithaltige Pastenmischung und anschließend ein Separatorband, bestehend aus einer Polymermischung und $SiO_2$ in Pastenform aufgebracht wird und zu einer Folie verarbeitet wird. Um Durchkontaktierungen der aktiven Masse durch das gelartige Separatorband zu vermeiden, sind bei derartigen Verfahren verhältnismäßig dikke Separatorschichten notwendig, die den Innenwiderstand der Zelle erhöhen und die Energiedichte herabsetzen.

Üblicherweise liegt einer Elektrode, die in solchen galvanischen Elementen verwendet wird, eine nasschemische hergestellte Folie zugrunde, bei der eine erhebliche Menge, in der Regel mehr als 70 Gewichtsprozent aktives Material, in einem gelösten Binderpolymer suspendiert und zu einer Folie mittels Rakeln ausgezogen wird. Die Suspension enthält gegebenenfalls noch Weichmacher und Leitfähigkeitsverbesserer. Der Zellverbund wird hergestellt durch Lamination der Elektrodenfolien auf folienartige Ableiterelektroden, und der so erhaltene Verbund wird mit dem Separator in einem weiteren Laminationsschritt verbunden. Die Laminierungstemperatur liegt üblicherweise bei 110°C bis 140°C und erfolgt bei einem definierten Druck in einem Bandlaminator.

Das US-Patent 5 460 904 beschreibt beispielsweise eine solche Vorgehensweise. Dieser Druckschrift sind Lithium interkalierende Elektroden zu entnehmen, bei denen die aktive Masse in einer Matrix aus Polyvinylidendifluorid-Hexafluorpropylen-Copolymer verteilt ist. Zwischen diesen Elektroden ist ein aus den gleichen Materialien hergestellter Gel-Separator mit $SiO_2$ als Füllstoff angeordnet. Die Elektroden und der Separator werden anschließend zu einem Zellverbund laminiert.

Füllstoffseparatoren mit einem Polymer als Binder und einer binären Sauerstoffverbindung wie $Al_2O_3$ oder insbesondere abgerauchtem $SiO_2$ als Füllstoff mit sehr großer effektiver Oberfläche bringen hierbei mehrere inhärente Probleme mit sich. Da in 4 Volt-Systemen aus Stabilitätsgründen nur fluorhaltige Leitsalze wie $LiPF_6$, $LiBF_4$, etc. eingesetzt werden können, diese aber gleichzeitig sehr hydrolyseempfindlich sind, und großtechnisch aufwandsbedingt immer ein Restwassergehalt im Bereich von einigen Zehn bis einigen Hundert ppm in Kauf genommen werden muss, können sauerstoffhaltige Füllstoffe einen wie folgt beschriebenen Zyklus initiieren. Das Leitsalz zerfällt dabei zunächst gemäß

$$LiPF_6 \rightarrow PF_5 \uparrow + LiF \downarrow.$$

Dieser Zerfall tritt in sehr geringem Maße mit der Zeit ein und wird durch Einflüsse wie Licht oder erhöhte Temperatur beschleunigt. $PF_5$ ist das hydrolyseempfindliche Erstzersetzungsprodukt, es reagiert mit Spuren von Wasser unter Freisetzung von HF

$$PF_5 + H_2O \rightarrow POF_3 + 2HF.$$

HF reagiert in der Regel mit sauerstoffhaltigen Verbindungen unter Freisetzung von Wasser. Als Beispiel sei die Reaktion mit $SiO_2$ ausgeführt.

$$SiO_2 + 4HF \rightarrow SiF_4 + 2H_2O.$$

Die Reaktion läuft bei Raumtemperatur zwar nur in sehr geringem Maße ab, wird aber über die Nachlieferung von $H_2O$ immer aufrecht erhalten.

Ein zu hoher HF-Gehalt wirkt mit der Zeit zwangsläufig negativ durch Korrosion bzw. Passivierung der Ableitelektroden wie auch Zerstörung und Auflösung der sogenannten SEIs ("Solid Electrolyte Interfaces"), ionenleitender Festelektrolytschichten, die ein zumindest kinetisch stabiles Reaktionsprodukt der Erstzersetzung des flüssigen organischen Elektrolyten beim Laden der Zelle bilden und damit eine weitere Zersetzung des flüssigen organischen Lithiumelektrolyten unterbinden. Dieser Auflösungsprozess kann insbesondere bei erhöhter Temperatur (60°C - 80° C) stark beschleunigt sein und zur Gasung der Zelle führen. Ein langsames Anwachsen der SEIs bei Raumtemperatur durch Lösen und Neuaufbau erhöht den Zellwiderstand, dies macht sich bei gleicher Entladestromstärke durch Abnahme der Kapazität über die Zyklenzahl bemerkbar.

Ein zweiter großer Schwachpunkt dieser Füllstoffseparatoren besteht in ihrer mechanischen Konsistenz. Damit werden diese Separateren, insbesondere wenn noch erhebliche Mengen von Weichmachern eingearbeitet werden müssen, sehr laminationsempfindlich, und man muss die Gefahr von Kurzschlüssen durch Dicke kompensieren. Dies wiederum erhöht den Widerstand, reduziert damit die Energiedichte und bringt mehr Füllstoffmaterial ein, das nach den oben beschriebenen Reaktionswegen wechselseitig und aufschaukelnd Wasser und Flusssäure generiert. Zudem muss gegebenenfalls noch der Weichmacher wieder aufwendig extrahiert werden, da dieser in der Regel elektrochemisch inkompatibel ist.

Aus diesen Gründen sind chemisch inerte, dabei sehr dünne aber dennoch stabile und großtechnisch verarbeitbare Separatormaterialien von großem Interesse. Polyolefine wie Polypropylen (PP), Polyethylen (PE) oder Sequenzen (z.B. PE/PP/PE) dieser Materialien erfüllen in hohem Maße diese Anforderungen und kommen daher in gewickelten Lithiumzellen schon seit langer Zeit zum Einsatz. Überdies besitzen die Polyolefinseparatoren einen inhärenten Sicherheitsmechanismus, den sogenannten "Shut down": In einer kritischen Zellsituation wie Kurzschluss oder äußerer mechanischer Penetration verbunden mit raschem Anstieg der Temperatur dichten sich die mit flüssigem Elektrolyten gefüllten Poren durch das Zusammenschmelzen des Separators selbst, der innere, ionische Stromfluss der Zelle wird unterbrochen, der Zellwiderstand steigt rapide an und die Zelle kann sich nicht mehr weiter erhitzen. Zudem sind Polyolefinseparatoren kostengünstiger und umweltfreundlicher. Dabei sind die zuvor beschriebenen Systeme jedoch immer auf einen externen Druck angewiesen, den man entweder aufwendig über Federn, besondere eigenverspannende Wickeltechnologien der trockenen Zelle, spezielle Gehäuseformen mit Vorspannungen und vergleichbare Vorrichtungen aufbringen muss. Wünschenswert wäre jedoch eine Zelle, die bereits ohne Gehäuse einen mechanischen Zusammenhalt besitzt. Dies eröffnet neue, extrem dünne oder flächige Bauformen und ist ganz allgemein für einen verbesserten Elektroden-/Separator-Kontakt von Vorteil.

Es ist auch bekannt, beschichtete PP, PE Separatoren oder Sequenzen aus diesen, die mit dem Elektrodenbinder beschichtet sind, zu verwenden. Aus dem Dokument WO/0069010 ist beispielsweise eine Lithium-Ionen-Zelle entnehmbar, bei der als Separator zwischen positiven und negativen Elektroden ein Polyolefinseparator verwendet wird, welcher mit dem gleichen Binderpolymer beschichtet ist, welches in den Elektroden zum Einsatz kommt. Diese Verfahrensweise ist jedoch aufwendig, da der Separator zuerst nasschemisch beschichtet und anschließend noch laminiert werden muss und schränkt die Herstellungsparameter für den Zellverbund stark ein.

## Aufgabe und Lösung

Der Erfindung liegt die Aufgabe zugrunde, ein Verfahren zur Herstellung eines Elektroden-/Separatorverbunds der eingangs genannten Art anzugeben, welches einfach durchführbar ist, bei dem insbesondere die Verarbeitung unter beliebiger Atmosphäre und mit einer weiten Auswahl Polyolefin-basierter Separatoren und Elektrodenmaterial durchgeführt werden kann.

Diese Aufgabe wird erfindungsgemäß bei einem Verfahren der eingangs genannten Art durch die Merkmale des Anspruchs 1 gelöst. In den weiteren Ansprüchen sind vorteilhafte Ausgestaltungen des Verfahrens und galvanische Elemente mit nach dem Verfahren hergestellten Elektroden/Separatorverbunden angegeben. Der Wortlaut der Ansprüche wird durch ausdrückliche Bezugnahme zum Inhalt der Beschreibung gemacht.

Durch Anwendung des erfindungsgemäßen Verfahrens kann das Problem, einen unbeschichteten Separator zu verwenden, auf folgende Weisen gelöst werden: Man verwendet eine Temperatur nahe beim Schmelz-/ bzw. Erweichungspunkt des Polymermaterials der Elektrode als Laminationstemperatur und einen Separator, dessen Schmelztemperatur höher liegt, um ein Durchkontaktieren zu verhindern. Ein Beispiel für eine derartige Ausgestaltung ist als Elektrodenpolymer PVDF-HFP (Polyvinylidenfluorid-Hexafluorpropylen) mit einem so abgestimmten PVDF/HFP-Verhältnis, dass der Schmelz- bzw. Erweichungspunkt im Bereich von 140°C - 150° C liegt (z. B. Powerflex von Elf Atofina). Der Separator ist ein einlagiger PP-Separator, dessen Schmelzpunkt bei ca. 160° C liegt. Der Elektrodenbinder PVDF-HFP dringt bei seiner Erweichung etwas in die Poren des PP-Separators ein, und dadurch wird eine Verankerung zwischen Elektrode und Separator erreicht.

Beim Einsatz der Heißlamination, insbesondere der Bandlamination, hat sich überraschenderweise herausgestellt, dass Zellen mit einem PP/PE/PP basierten Separator bei Laminationstemperaturen im Bereich des Schmelz- bzw. Erweichungspunktes hergestellt werden können, obwohl die Shut-down Temperatur von PE bei 120° C liegt. Die kurze Verweilzeit im Laminator bei gegebenem Druck führt offenbar trotz der hohen Temperatur statt eines Porenschlusses zu einer Wieder-Verporung des Separators oder wenigstens zu einer Offenhaltung der bestehenden Poren.

Will man zusätzlich oder ausschließlich den Schmelz- bzw. Erweichungspunkt des Separators zur Schaffung des Elektroden-/Separatorverbundes nutzen, bleibt immer die latente Gefahr einer Durchkontaktierung des Separators. Daher bietet sich eine Sequenz der Art PE/PP/PE an. PP mit höherem Schmelzpunkt von ca. 160 ° C bleibt als Kernfolie und verhindert das Durchkontaktieren, PE könnte damit bei ca. 120°C - 130°C sogar derart thermoplastisch verformt werden, ohne dass es dabei zu einem nachteiligen Porenschluss kommt. Eine besondere Ausgestaltung besteht darin, die Porosität der außen liegenden PE-Lagen zusätzlich noch relativ grob zu wählen, um eine optimierte Elektrolytpenetration zu gewährleisten.

In einer weiteren Ausgestaltung des erfindungsgemäßen Verfahrens kann auch ein teil- bzw. punktbeschichteter Separator verwendet werden, die Punktbeschichtung mit einem die Haftung erhöhenden Material übernimmt hierbei die Aufgabe eines thermoplastisch wirkenden Klebers. Die Fläche der Punktbeschichtung, typischerweise 5 %, ist dabei so gering gewählt, dass eine fehlende oder ungenügende Elektrolytpenetration in diesen Bereichen sowie elektrochemische Seitenreaktionen an der Phasengrenze Separator/ negative Elektrode, immer dort wo die Beschichtung lokalisiert ist, billigend in Kauf genommen werden können.

Die zusätzliche Beschichtung kann 1% - 60% der Separatorfläche, vorzugsweise 5% - 10% der Separatoroberfläche, bedecken und kann insbesondere aus Polyvinylidenfluorid oder Polyvinylidenfluorid und Hexafluorpropylen bestehen.

Durch die zusätzlich Teilbeschichtung, die eine Haftung zwischen Elektrode und Separator vermittelt, wird gewährleistet, dass diese Bauteile im Fertigungsprozess auch vor der Heißlamination einen ausreichenden Zusammenhalt besitzen.

Weiterhin ist es erfindungsgemäß vorteilhaft, eine Coronabehandlung der Separatoroberfläche vorzunehmen. Durch einen Elektronenstrahl wird diese gereinigt, modifiziert und aktiviert, was zu erheblich verbesserten Haftungseigenschaften führt.

Eine geringere bzw. lokal sogar fehlende Haftung des Separators kann bei der Aktivierung der Zelle, also der Tränkung mit flüssigem organischem Lithiumelektrolyten, für dessen gleichmäßige und schnelle Penetration von Vorteil sein. Auch sicherheitstechnisch ist das vorteilhaft, denn bei einer ungewollten Überladung der Zelle führt die Gasentwicklung als Folge der Zersetzung des flüssigen Elektrolyten zu einer leichteren Dekontaktierung und damit zu der Unterbindung weiteren Stromflusses.

Als für einen erfindungsgemäßen Elektroden-/ Separatorverbund geeignete Polymere werden Polyvinylidenfluorid und Hexafluorpropylen oder auch wasserlösliche Binder verwendet. Als Lösungsmittel können dann beispielsweise N-Methylpyrolidin-2-on, Aceton oder Wasser Verwendung finden. Das poröse Separatormaterial besteht aus Polyolefinen, aus Polypropylen, Polyethylen oder kann mehrlagig aus verschiedenen dieser Materialien hergestellt sein, deren Porosität variieren kann. Die Elektroden und/oder die Separatorbeschichtung können einen Plastifizierer enthalten.

Als Material der negativen Elektrode kommen metallisches Lithium, Lithium-legierbare Metalle oder graphitisierter Kohlenstoff mit Modifikationen in Betracht sowie Interkalationsverbindungen aus Mischoxiden mit geeigneter Spannungslage wie $Li_{4/3}[Ti_{5/3}]O_4$, während die positive Elektrode als Lithium interkalierendes Material eine Lithiumkobalt-, -nickeloder -mangansauerstoffverbindung enthält, die gegebenenfalls mit Lithium, Magnesium, Aluminium oder Fluor zusätzlich stabilisiert sein kann.

Die Pastenmischungen für negative Elektrodenfolien enthalten zwischen 55 und 95 Gewichtsprozent, vorzugsweise 65 bis 85 Gewichtsprozent der genannten Materialklassen. Die Pastenmischung für positive Elektroden enthält 65 bis 98 Gewichtsprozent, vorzugsweise 65 bis 95 Gewichtsprozent des positiven Elektrodenmaterials, jeweils bezogen auf die Trockenmasse. Erfindungsgemäße Nasspastenmischungen enthalten 25 bis 50 Gewichtsprozent, vorzugsweise 35 bis 45 Gewichtsprozent, Trockenmasse. Der Rest ist Lösemittel, dass dann an 100% bezogen auf die Gesamtnassmasse aufgefüllt wird. Das PVDF/HFP-Verhältnis liegt bei positiven Elektrodenfolien zwischen maximal 99,5 und minimal 0,5, vorzugsweise zwischen maximal 80 und minimal 20. Das Verhältnis der Molekulargewichte zwischen PVDF/HFP liegt zwischen 3,2 und 2,8, vorzugsweise zwischen 2,3 und 2,5.

Bei negativen Elektrodenfolien liegt das PVDF/HFP-Verhältnis zwischen 99,5 und 0,5, vorzugsweise zwischen 85 und 15. Das Verhältnis der Molekulargewichte liegt zwischen 3,2 und 2,8, vorzugsweise zwischen 2,3 und 2,5.

Die Masse wird so hergestellt, dass die Viskosität der Ausgangspaste auf 1 bis 10 Pascal, vorzugsweise 3 bis 6 Pascal, eingestellt ist.

Zur Herstellung von galvanischen Elementen werden die Elektroden zunächst entweder direkt auf die Ableiter aufgerakelt oder über den Zwischenschritt des Aufrakelns auf eine Trägerfolie und folgende Heißlamination hergestellt. Der Zellaufbau erfolgt durch Heißlamination der Elektroden und des Separators, vorzugsweise in einem symmetrischen Aufbau der Art Elektrode B / Separator / Elektrode A / Separator / Elektrode B, um ein Biegen der Zelle aufgrund eines asymmetrischen Aufbaus zu unterbinden.

**Ausführungsbeispiel**

Eine pastöse Masse für die negative Elektrode wird hergestellt, indem 4812 g Kugelgraphit (MCMB 25-28, Osaka Gas) mit 138 g Leitruß (Super P, Erachem/Sedema) und 619 g Powerflex in 5 l Aceton innig vermischt und dann direkt auf eine Kupferfolie doppelseitig ausgerakelt werden. Der Kupferfolie wurde zuvor eine Oberflächenrauhigkeit durch die elektrochemische Abscheidung von Kupferkristalliten aufgeprägt, zum Korrosionsschutz bis zur abschließenden Verarbeitung wurde die so erhaltene Folie chromatisiert. Eine pastöse Masse für die positive Elektrode wird hergestellt, indem 2973 g $LiCoO_2$, 206 g Leitruß (Super P, Erachem/Sedema) und 310 g Powerflex in 5 l Aceton innig vermischt und dann direkt auf ein unbehandeltes Aluminiumstreckmetall (2 Al 6-077 F, Delker) beidseitig ausgerakelt werden Die negative Elektrode wird in 6 x 3 cm Stükke mit Ableitfähnchen ausgestanzt, darauf wird bei 130° C und 10 kg Anpressdruck ein einlagiger PP-Separator (Celgard 2500) auflaminiert. Geeignet ausgestanzte Kathodenstücke mit Ableitfähnchen werden bei 140° C und einem Druck von 10 kg beidseitig auf den so erhaltenen Verbund auflaminiert. Acht solcher Bizellen werden an den Ableitfähnchen mit einem massiven Ni-Ableiter (70 pm) auf der negativen und einem Al-Ableiter (70 pm) auf der positiven Seite ultraschallverschweißt, der so erhaltene Stapel in beidseitig beschichtete tiefgezogene Aluminimumfolie verpackt und mit 1 M $LiPF_6$ in 7:3 Gewichtsprozent Diethylcarbonat: Ethlyencarbonat aktiviert.

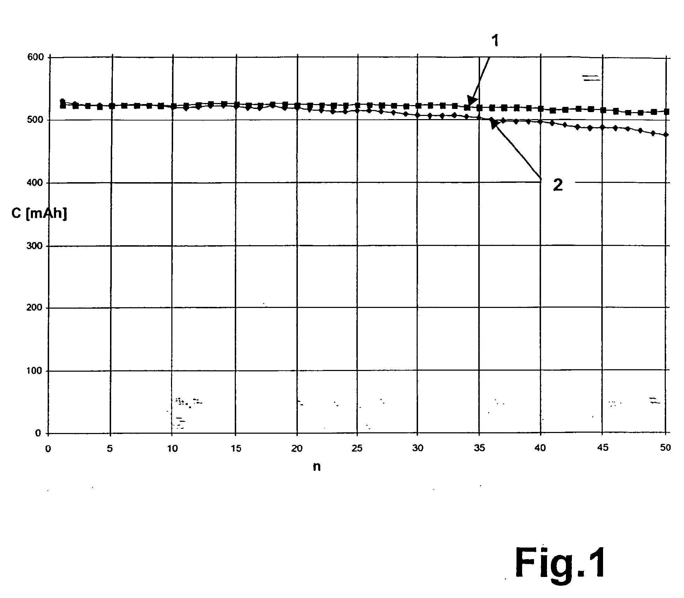

In Figur 1 ist die Kapazität C in Abhängigkeit von der Zyklenzahl n für zwei gemäß dem Beispiel hergestellte Zellen dargestellt. Die zwei Zellen werden mit ca. 1,15 bzw. 1,4 C konstantem Strom (entsprechend 600 mAh bei Kurve 1 und 750 mAh bei Kurve 2) auf 4,2 Volt geladen, die Spannung dann für 3h gehalten und dann mit 1,15 bzw. 1,4 C konstantem Strom (600 mAh bei Kurve 1 und 750 mAh bei Kurve 2) auf 3,0 Volt entladen. Aus dem geringen Abfall der so erhaltenen Kurven ist ersichtlich, dass die so hergestellten Zellen eine hohe Zuverlässigkeit besitzen.

## Patentansprüche

1. Verfahren zur Herstellung eines Elektroden-/Separatorverbunds für galvanische Elemente, die mindestens eine Lithium interkalierende Elektrode, in deren Polymermatrix im Polymer unlösliche elektrochemisch aktive Materialien fein dispergiert sind, und einen Polyolefinseparator enthalten, **dadurch gekennzeichnet, dass** die Herstellung des Elektroden-/Separatorverbunds durch Heißlamination bei Temperaturen erfolgt, die im Bereich des Schmelz- bzw. Erweichungspunktes wenigstens eines Teils der Elektrodenoberfläche und/oder eines Teils der Separatoroberfläche liegt.

2. Verfahren nach Anspruch 1, **dadurch gekennzeichnet, dass** der Separator mit einer die Haftung erhöhenden Teilbeschichtung seiner Oberfläche versehen ist.

3. Verfahren nach Anspruch 2, **dadurch gekenn-**

**zeichnet, dass** die Teilbeschichtung 1% - 60% der Separatoroberfläche, vorzugsweise 5% - 10% der Separatoroberfläche, bedeckt.

4. Verfahren nach wenigstens einem der vorhergehenden Ansprüche, **dadurch gekennzeichnet, dass** Polyvinylidenfluorid und/oder Hexafluorproplyen als Elektrodenbinder und zusätzliche Teilbeschichtung der Separatoroberfläche verwendet wird.

5. Verfahren nach wenigstens einem der vorhergehenden Ansprüche, **dadurch gekennzeichnet, dass** als Lösungsmittel für den Elektrodenbinder N-Methylpyrolidin-2-on, Aceton oder Wasser verwendet werden.

6. Verfahren nach wenigstens einem der vorhergehenden Ansprüche, **dadurch gekennzeichnet, dass** die Elektroden und/oder die Separatorbeschichtung eine Plastifizierer enthalten.

7. Verfahren nach wenigstens einem der vorhergehenden Ansprüche, **dadurch gekennzeichnet, dass** der Polyolefinseparator aus einer Sequenz verschiedener Polyolefine besteht, wobei vorzugsweise die Polyolefine unterschiedliche Porositäten besitzen.

8. Verfahren nach wenigstens einem der vorhergehenden Ansprüche, **dadurch gekennzeichnet, dass** die Oberfläche des Separators einer Coronabehandlung unterworfen wird.

9. Galvanisches Element mit mindestens einem Elektroden-/Separatorverbund, **dadurch gekennzeichnet, dass** der Elektroden-/Separatorverbund nach einem Verfahren gemäß einem der Ansprüche 1 bis 8 hergestellt ist.

10. Galvanisches Element nach Anspruch 9, **dadurch gekennzeichnet, dass** der Elektroden-/Separatorverbund auf mindestens eine Ableitelektrode oder Elektrode auflaminiert ist und der Stapel mit einem flüssigen organischen Elektrolyten getränkt ist.

Fig.1